(19) Europäisches Patentamt
European Patent Office
Office européen des brevets

(11) **EP 1 917 545 B1**

(12) **EUROPEAN PATENT SPECIFICATION**

(45) Date of publication and mention
of the grant of the patent:
**22.02.2023 Bulletin 2023/08**

(21) Application number: **06800182.5**

(22) Date of filing: **21.07.2006**

(51) International Patent Classification (IPC):
**G01V 5/10** $^{(2006.01)}$

(52) Cooperative Patent Classification (CPC):
**G01V 5/101; G01V 5/102**

(86) International application number:
**PCT/US2006/028284**

(87) International publication number:
**WO 2007/015953 (08.02.2007 Gazette 2007/06)**

(54) **MEASUREMENT OF FORMATION GAS PRESSURE IN CASED WELLBORES USING PULSED NEUTRON INSTRUMENTATION**

MESSUNG DES FORMATIONSGASDRUCKS IN VERKLEIDETEN BOHRLÖCHERN UNTER VERWENDUNG EINER GEPULSTEN NEUTRONENINSTRUMENTIERUNG

MESURE DE LA FORMATION DE PRESSION DE GAZ DANS DES TROUS DE FORAGE TUBES AU MOYEN D'INSTRUMENTS A NEUTRONS PULSES

(84) Designated Contracting States:
**GB NL**

(30) Priority: **26.07.2005 US 189388**
**26.07.2005 US 189455**
**26.07.2005 US 189514**

(43) Date of publication of application:
**07.05.2008 Bulletin 2008/19**

(73) Proprietor: **Baker Hughes Holdings LLC**
**Houston, TX 77073 (US)**

(72) Inventors:
• **TRCKA, Darryl, E.**
**Fort Worth, TX 76126 (US)**
• **RILEY, Steve**
**Springs, TX 77379 (US)**
• **GUO, Pingjun**
**Pearland, TX 77584 (US)**

(74) Representative: **Novagraaf Group**
**Chemin de l'Echo 3**
**1213 Onex/ Geneva (CH)**

(56) References cited:
US-A- 4 524 274         US-A- 4 833 914
US-A- 5 105 080         US-A1- 2003 178 560
US-A1- 2005 067 563

• W A Gilchrist ET AL: "Introduction of a New through-Tubing Multifunction Pulsed Neutron Instrument", , 1 October 1999 (1999-10-01), pages 3-6, XP55278571, Retrieved from the Internet: URL:https://www.onepetro.org/download/conference-paper/SPE-56803-MS?id=conference-paper/SPE-56803-MS [retrieved on 2016-06-07]
• Medhat Mickael ET AL: "Dynamic Multi-parameter interpretation of Dual-Detector Carbon/oxygen Measurements", , 1 October 1999 (1999-10-01), pages 3-6, XP55278993, Retrieved from the Internet: URL:https://www.onepetro.org/download/conference-paper/SPE-56649-MS?id=conference-paper/SPE-56649-MS [retrieved on 2016-06-08]
• Luis Fernando Quintero: "Determination of Hydrocarbon Type From the Dual-Spaced Neutron Tool Responses. Recommended Citation", LSU Historical Dissertations and Theses. 6593, 1 January 1997 (1997-01-01), XP55713585, Retrieved from the Internet: URL:https://digitalcommons.lsu.edu/cgi/viewcontent.cgi?article=7592&context=gradschool_disstheses [retrieved on 2020-07-10]

**Description**

## BACKGROUND OF THE INVENTION

This invention relates generally to oil and gas well logging tools. More particularly, this invention relates tools for measuring gas saturation of earth formations through the use of gamma rays generated by a neutron source. This invention may be used in cased holes as well as open holes.

In petroleum and hydrocarbon production, there is considerable commercial value in the recovery of gas from reservoirs. Over the course of production of gas, there is an increasing influx of water into the reservoir. This may be due to natural causes or it may be, in the case of secondary recovery operations, the result of injection of water into the reservoir. The production of gas thus leads to a decrease in gas saturation of the reservoir. In addition, due to the fact that reservoirs by their very nature comprise permeable earth formations within impermeable strata, production of gas leads to a decrease of gas pressure. The decrease of gas pressure in turn affects the flow pattern of reservoir fluids. Knowledge of the gas pressure is also very helpful in reservoir development. Knowledge of gas saturation is also important in enhanced oil recovery programs (EOR) where a gas is injected into an injection well and used to direct the flow of oil from the reservoir into a production well.

A basic methodology underlying the determination of gas saturation and/or gas pressure is that of density determination. One approach involves detection of gamma radiation produced in the formation in response to a high-energy neutron source, referred to as induced gamma ray logging. When the neutron source is pulsed, gamma rays are produced by one of two reactions. The first is inelastic scattering of fast neutrons (neutrons with energies above about one MeV or within about one order of magnitude). The second mechanism is from capture of epithermal neutrons (neutrons with energy of about one eV). The third is from capture of thermal neutrons (neutrons with energy of about 0.025 eV). The fast-neutron lifetimes are very small (a few microseconds) such that during the source pulse a mixed-energy neutron field exists. Shortly after the burst, all neutrons slow down to a thermal energy level and these thermal neutrons wander about until being captured, with a lifetime in the hundreds of microseconds. Gamma rays from inelastic scattering are produced in close proximity to the accelerator, and gamma rays from thermal capture are dispersed farther from the accelerator (up to tens of centimeters). The number of capture gamma rays is strongly influenced by the amount of hydrogen and the thermal neutron capture cross section of the formation. The number of gamma rays produced from inelastic scattering areis less dependent on these quantities, and a measurement of such gamma rays is more directly related to the formation density. Use of a pulsed neutron source allows capture gamma rays to be separated from inelastic gamma rays, giving a better estimate of density.

US3780301 to Smith Jr. et al. discloses a method and apparatus for determination of gas saturation using a logging tool deployed in an open borehole. A pulsed neutron source produces pulses of neutrons with energy of about 14 MeV. A single gamma ray detector measures counts of inelastic gamma rays resulting from interaction of the neutrons with nuclei in the formation. Specifically, counts are made in energy bands corresponding to C, O, Si and Ca. By comparing the Si/Ca and C/O ratios in these regions to the Si/Ca and C/O ratios for a known water sand, the relative abundance of limestone in the low hydrogen content formations may be estimated thus distinguishing gas zones from water saturated low porosity limestone.

When the wellbore in which the tool is run is an uncased reservoir, the tool is able to contact the subterranean formation itself. However, once a well has been cased, there exists a layer of steel and concrete between the interior of the wellbore where the tool is located and the formation itself. The well casing makes it difficult for signals to pass between the tool and the reservoir and visa versa. In addition, the cement can confuse the measurement of formation properties.

Formation density measurements have traditionally been made using two gamma ray detectors. In open hole situations, density estimates $\rho_{SS}$ and $\rho_{LS}$ made by the near and far detectors are used to get a corrected density estimate using the spine and rib method which may be represented by the equation

$$\rho - \rho_{LS} = \Delta\rho = f\left(\rho_{LS} - \rho_{SS}\right) \qquad (1),$$

where $f(.)$ is a function that is nonlinear, depends upon the standoff of the tool or the amount of mud cake between the tool and formation, and determined by a calibration process. This dual detector arrangement is able to compensate for standoff (in MWD applications) and mudcake thickness (in wireline applications). When used with a pulsed neutron source, correction also has to be made for variations in the source intensity, so that a two detector arrangement only gives a single estimate of density based on, for example, a ratio of the outputs of the two detectors.

For measurements made in cased holes, as noted above, there is an additional complication due to the presence of casing and cement. In order to probe the formation, neutrons must exit the tool, pass through the casing and cement and scatter, or be captured in the formation before the resulting gamma rays pass passing back through the cement and the casing to finally reenter the tool to be detected. Thus, instead of just a mudcake correction (for open hole wireline) or a standoff correction (for MWD), a cased hole density tool must be able to correct or compensate for the cement and casing, an effect which is greater than that of the mudcake. US5525797 to Moake discloses the use of a three detector tool using a chemical gamma ray source which corrects for the effects of casing. A drawback of the *Moake* device is the need for a relatively high energy chemical source (a safety issue) and the fact that gamma ray energies are measured (instead of count rates). In addition, it is not possible to separate inelastic gamma rays from capture gamma rays.

US5825024 to Badruzzaman discloses an apparatus for measuring the density of a subterranean formation from within a wellbore, especially a cased wellbore. The apparatus has an energy source configured to generate 14 MeV of neutrons in pulses of 20 microseconds or less. The apparatus has at least three detectors for detecting gamma rays which are produced as a result of the neutron pulse. The detectors and energy source are aligned along a central axis with the energy source being at one end. Shielding is disposed between each of the three detectors and between the end detector and the energy source adjacent to it. The detectors are configured to measure gamma rays below 700 KeV and generate a signal in response thereto. The signals may then be compared to predetermined characteristic signals or computer simulations to determine the density, and hence porosity, of the formation.

*Badruzzaman et al.* (SPE89884) discuss the use of a four sensor arrangement for through-casing density measurements with a pulsed neutron source. These included a pseudo-density determination, C/O measurements for oil saturation determination, and pulsed neutron capture (PNC) cross section measurements for water and steam saturation.

None of the prior art recognizes the inter-relation between the effects of gas saturation and gas pressure on the measurements made by a nuclear logging tool. The present invention recognizes the inter-relation and represents a comprehensive approach to the determination of reservoir characteristics through casing.

US 5105080 discloses an apparatus for determining the respective contributions in spectroscopy measurements of the borehole and the earth formations surrounding the borehole, derived from the detection of gamma rays resulting from the collisions of neutrons with atoms of the formation or the borehole.

A paper entitled "Introduction of a New Through-Tubing Multifunction Pulsed Neutron Instrument" by W.A. Gilchrist, Jr., discloses a 1-11/16-inch multi-function pulsed neutron instrument. The instrument includes three gamma-ray detectors arrayed above a new neutron generator that can be pulsed at different frequencies and modes for different types of measurements.

A paper entitled "Dynamic Multi-parameter Interpretation of Dual-Detector Carbon/Oxygen Measurements" by Medhat Mickael et al. discloses a method of interpreting carbon/oxygen data using computer modelling. A carbon/oxygen response is dynamically generated at every depth level based on a non-linear model that simultaneously accounts for variations in completion geometry, borehole diameter, formation porosity and mineralogy, and borehole holdup.

US 2003/0178560 discloses a borehole logging system for determining bulk density, porosity and formation gas/liquid fluid saturation of formation penetrated by a borehole. The system uses measure of fast neutron radiation and inelastic scatter gamma radiation.

US 2833914 discloses a method for investigating properties of subsurface formations traversed by a borehole.

US 4524274 discloses a neutron porosity logging tool.

US 2005/0067563 discloses a well logging instrument.

A paper entitled "Determination of Hydrocarbon Type from the Dual-Spaced Neutron Tool Responses" by Luis Fernando Quintero discloses a method for determining the fluid type present in a formation.

## SUMMARY OF THE INVENTION

One embodiment of the invention is a method of evaluating an earth formation having a gas therein, according to claim 1. The borehole may be a cased borehole. A pulsed neutron source may be used. The detectors may be gamma ray detectors. Establishing the values of the GZP may be based on a formation mineralogy, a formation porosity, a tool response characteristic, a formation fluid density, a borehole fluid density, a borehole diameter, a casing diameter, a gas density, and/or an equation of state. The at least one depth may include a plurality of depths, and displays may be made at each of the plurality of depths, the determined value of the GZP, the established values of the GZP for the at least two different values of $S_g$ and values of the GZP for a reservoir with substantially no gas therein. Estimating the value of $S_g$ may be based on a linear interpolation, a nonlinear interpolation, a linear extrapolation, and/or a nonlinear extrapolation.

Another embodiment of the invention is an apparatus for evaluating an earth formation having a gas therein, according to claim 10. The borehole may be a cased borehole. The source may be a pulsed neutron source. The interaction may be inelastic scattering. The processor may establish the values of the GZP using a formation mineralogy, a formation porosity, a tool response characteristic, a fomlation fluid density, a borehole fluid density, a borehole diameter, a casing diameter, a gas density, and/or an equation of state. The at least one depth further may include a plurality of depths, and the processor may displays, at each of the plurality of depths, the determined value of the GZP, the established values of the GZP for the at least two different values of $S_g$ and a value of the GZP for a reservoir having substantially no gas therein. The source of neutrons may be conveyed into the borehole on a wireline or a slickline.

Another embodiment of the invention is a machine readable medium for use with an apparatus for evaluating an earth formation having a gas therein, according to claim 18. The medium may be a ROM, an EPROM, an EEPROM, a Flash Memory, and/or an optical disk.

BRIEF DESCRIPTION OF THE FIGURES

The present invention is best understood with reference to the accompanying figures in which like numerals refer to like elements and in which:

FIG. 1 (prior art) is an overall schematic diagram of the nuclear well logging system of the present invention;
FIG. 2 (prior art) illustrates the generation of gamma rays by inelastic scattering and capture of thermal and epithermal neutrons;
FIG. 3 is a flow chart illustrating one part of the invention relating to determination of gas saturation and gas pressure;
FIG. 4 shows an exemplary variation of the Gas Zone Parameter (GZP) as a function of porosity for a water-saturated and a gas-saturated reservoir;
FIG. 5 is an exemplary display of the GZP in a well used in enhanced oil recovery;
FIG. 6 shows an example of the effect of gas pressure on the variation of the Gas Zone Parameter (GZP) as a function of effective porosity for a water-saturated and a gas-saturated reservoir;
FIG. 7 shows an example of a gas reservoir having a depleted zone;
FIG. 8 illustrates the principle of using GZP and C/O measurements to determine saturation and pressure;
FIG. 9 is an exemplary plot showing variation of the C/O ratio as a function of effective porosity for different formation fluids; and
FIG. 10 is a flow chart illustrating the methodology for simultaneous determination of formation pressure and gas saturation from GZP and C/O ratios.

## DETAILED DESCRIPTION OF THE INVENTION

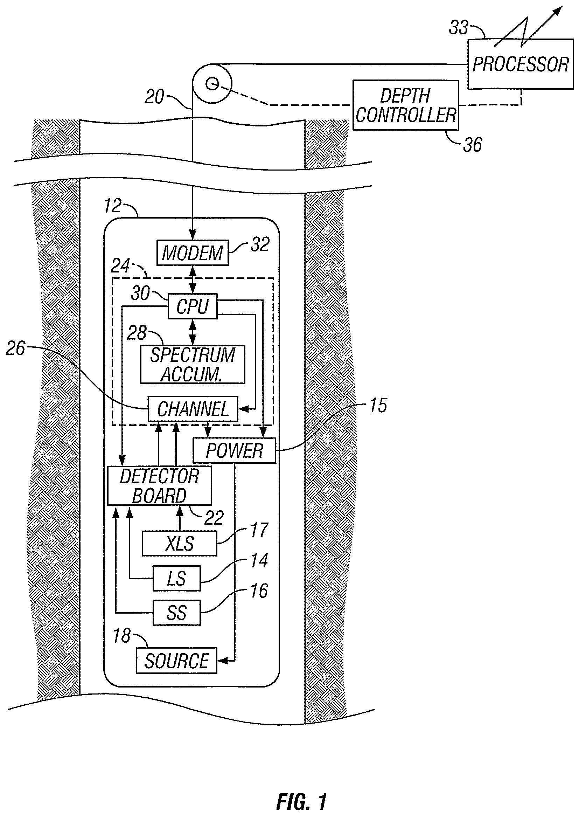

The system shown in **Fig. 1** is a prior art system for density logging. Well **10** penetrates the earth's surface and may or may not be cased depending upon the particular well being investigated. Disposed within well **10** is subsurface well logging instrument **12**. The system diagrammed in **Fig. 1** is a microprocessor-based nuclear well logging system using multi-channel scale analysis for determining the timing distributions of the detected gamma rays. Well logging instrument **12** includes an extra-long spaced (XLS) detector **17,** a long-spaced (LS) detector **14,** a short-spaced (SS) detector **16** and pulsed neutron source **18**. In one embodiment of the invention, XLS, LS and SS detectors **17, 14** and **16** are comprised of suitable material such as bismuth-germanate (BGO) crystals or sodium iodide (NaI) coupled to photomultiplier tubes. To protect the detector systems from the high temperatures encountered in boreholes, the detector system may be mounted in a Dewar-type flask. This particular source and flask arrangement is an example only, and should not be considered a limitation. Also, in one embodiment of the invention, source **18** comprises a pulsed neutron source using a D-T reaction wherein deuterium ions are accelerated into a tritium target, thereby generating neutrons having energy of approximately 14 MeV. This particular type of source is for exemplary purposes only and not to be construed as a limitation. The filament current and accelerator voltage are supplied to source **18** through power supply **15**. Cable **20** suspends instrument **12** in well **10** and contains the required conductors for electrically connecting instrument **12** with the surface apparatus.

The outputs from XLX, LS and SS detectors **17,144** and **16** are coupled to detector board **22,** which amplifies these outputs and compares them to an adjustable discriminator level for passage to channel generator **26**. Channel generator **26** is a component of multi-channel scale (MCS) section **24** which further includes spectrum accumulator **28** and central processor unit (CPU) **30**. MCS section **24** accumulates spectral data in spectrum accumulator **28** by using a channel number generated by channel generator **26** and associated with a pulse as an address for a memory location. After all of the channels have had their data accumulated, CPU **30** reads the spectrum, or collection of data from all of the channels, and sends the data to modem **32** which is coupled to cable **20** for transmission of the data over a communication link to the surface apparatus. Channel generator **26** also generates synchronization signals which control the pulse frequency of source **18,** and further functions of CPU 30 in communicating control commands which define certain operational parameters of instrument **12** including the discriminator levels of detector board **22,** and the filament current and accelerator voltage supplied to source 18 by power supply **15**.

The surface apparatus includes master controller **34** coupled to cable **20** for recovery of data from instrument **12** and for transmitting command signals to instrument **12**. There is also associated with the surface apparatus depth controller **36** which provides signals to master controller 34 indicating the movement of instrument **12** within well **10**.

The system operator accesses the master controller **34** to allow the system operator to provide selected input for the logging operation to be performed by the system. Display unit **40** and mass storage unit **44** are also coupled to master controller **34.** The primary purpose of display unit **40** is to provide visual indications of the generated logging data as well as systems operations data. Storage unit **44** is provided for storing logging data generated by the system as well as for retrieval of stored data and system operation programs. A satellite link may be provided to send data and or receive instructions from a remote location.

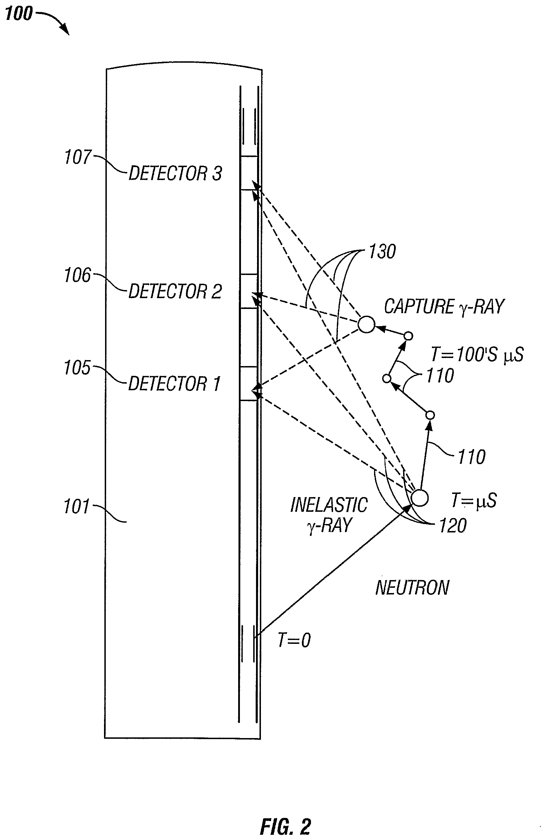

In a well logging operation such as is illustrated by **Fig.1,** master controller **34** initially transmits system operation programs and command signals to be implemented by CPU **30,** such programs and signals being related to the particular well logging operation. Instrument **12** is then caused to traverse well **10** in a conventional manner, with source **18** being pulsed in response to synchronization signals from channel generator **26.** Typically, source **18** is pulsed at a rate of 1000 bursts/second (1 KHz). This, in turn, causes a burst of high energy neutrons on the order of 14 MeV to be introduced into the surrounding formation to be investigated. As discussed below with reference to **FIG. 2,** this population of high energy neutrons introduced into the formation will cause the generation of gamma rays within the formation which at various times will impinge on XLS, LS and SS detectors **17,14** and **16.** As each gamma ray thus impinges upon the crystal-photomultiplier tube arrangement of the detectors, a voltage pulse having an amplitude related to the energy of the particular gamma ray is delivered to detector board **22.** It will be recalled that detector board **22** amplifies each pulse and compares them to an adjustable discriminator level, typically set at a value corresponding to approximately 100 KeV. If such pulse has an amplitude corresponding to an energy of at least approximately 100 KeV, the voltage pulse is transformed into a digital signal and passed to channel generator **26** of MCS section **24.**

In addition, as would be known to those versed in the art, many of the functions of the components described with reference to **Fig. 1** may be carried out by a processor. It should also be noted that the system described in **Fig. 1** involves conveyance of the logging device into the well by a wireline. However, it is envisaged that the logging device could be part of a measurement while drilling (MWD) bottom hole assembly conveyed into the borehole by a drilling tubular such as a drillstring or coiled tubing. In addition, it should be noted that **Fig. 1** illustrates a tool in an open hole. The method and apparatus are equally well suited for use in cased holes.

**Fig. 2** shows an illustration of the logging tool suitable for use with the present invention. The apparatus illustrated is that of the Reservoir Performance Monitor (RPM) of Baker Atlas, Incorporated. A measurement device **100** comprises a neutron source 101 and three axially spaced apart detectors described below. The number of detectors shown in Fig. 2 is only an example of the number of detectors employed in an embodiment of the present invention. It is not a limitation on the scope of the present invention. The measurement device of the present invention may comprise two or more detectors. The neutron source 101 may be pulsed at different frequencies and modes for different types of measurements. The short-spaced (SS) detector 105 is closest to the source 101. The long-spaced (LS) detector is denoted by 106, and the furthest detector 107 is referred to as the extra-large spaced (XLS) detector. Fast neutrons (approximately 14MeV) are emitted from the source 101 and enter the borehole and formation, where they undergo several types of interactions. During the first few microseconds ($\mu$s), before they lose much energy, some neutrons are involved in inelastic scattering with nuclei in the borehole and formation and produce gamma rays. These inelastic gamma rays 120, have energies that are characteristic of the atomic nuclei that produced them. The atomic nuclei found in this environment include, for example, carbon, oxygen, silicon, calcium, and some others.

Two or more gamma-ray detectors are employed, in one or more modes of operation. Such modes include, but are not limited to, a pulsed neutron capture mode, a pulsed neutron spectrometry mode, a pulsed neutron holdup imager mode, and a neutron activation mode. In a pulsed neutron capture mode, for example, the tool pulses at 1 KHz, and records a complete time spectrum for each detector. An energy spectrum is also recorded for maintaining energy discrimination levels. Time spectra from short-spaced and long-spaced detectors can be processed individually to provide traditional thermal neutron capture cross section information, or the two spectra can be used together to automatically correct for borehole and diffusion effects and produce results substantially approximating intrinsic formation values.

In a pulsed neutron spectrometry mode, the instrument pulses at 10 kHz, for example, and records full inelastic and capture gamma ray energy spectra from each detector. These data are processed to determine elemental ratios including carbon/oxygen and calcium/silicon from the inelastic spectra and silicon/calcium from the capture spectra.

With the neutron generator turned off, the measurement apparatus can also be used to detect the distribution of materials, tagged with radioactive tracers, that are injected into the well during well treatments. In this manner, the effectiveness of operations such as hydraulic fracturing or gravel pack placement can be evaluated.

In an embodiment of the present invention, a pulsed neutron generator with improved reliability and higher output is coupled with high-speed downhole microprocessor-controlled drivers and detector electronics. The system supports multiple frequency operation and different detection gate timings to make the different measurements. The modes of operation can be selected from the surface with no need to pull the tool out of the well.

After just a few $\mu$s, most of the neutrons are slowed by either inelastic or elastic scattering until they reach thermal energies, about 0.025 eV. This process is illustrated schematically in **Fig. 2** as the sequence of solid arrows **110.** At thermal energies, neutrons continue to undergo elastic collisions, but they no longer lose energy on average. A

few μs after the neutron generator shuts off, the process of thermalization is complete. Over the next several hundred μs, thermal neutrons are captured by nuclei of various elements - again producing gamma rays, known as capture gamma rays **130**. A capture gamma ray energy spectrum yields information about the relative abundances of these elements. The inelastic gamma rays are depicted by **120**.

We next give a broad overview of the method of the present invention. As noted above, the objective is to determine gas saturation and/or gas pressure in a reservoir. We discuss first the situation in which the gas pressure is known and the objective is to determine the gas saturation. We next discuss the situation in which the gas saturation is known and the objective is to determine the gas pressure. We finally discuss a method of determining simultaneously the gas saturation and the gas pressure.

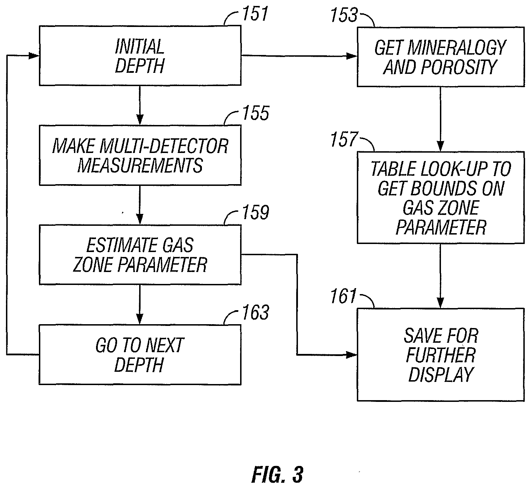

Turning now to **Fig. 3,** the methodology for determining gas saturation is discussed. The method is discussed in the context of processing of the data subsequent to measurement and recording, but it is to be understood that some or all parts of the method can be implemented substantially in real time. An initial depth is selected **151**. Corresponding to the initial depth, inelastic gamma ray measurements are made by the three or more detectors **155**. The depth information is used to identify **153** parameters such as the mineralogy and effective porosity of the earth formation at the depth **151**. The mineralogy and effective porosity may be obtained from prior measurements made under open-hole conditions, from rock cuttings, from core samples etc. The effective porosity $\phi_e$ is generally less than the total porosity $\phi$ that is determined by porosity logging tools. Effective porosity is the proportion of void space that excludes sealed-off pores. It thus measures the pore volume that is effectively interconnected. It may be determined, for example, by NMR measurements.

From the measurements made by the detectors **155,** the ratio $R_{IN13}$ of the near to the extra-long spacing detector for inelastic collisions is determined. This ratio has been found to be the most sensitive to the effects of gas. It should be noted that the ratio $R_{1N23}$ is also sensitive to the formation gas, but the statistical variability of this ratio is generally greater than that of $R_{IN12}$ and $R_{IN13}$. A weighted combination is discussed in US Patent Application Ser. No. 10/955,867 of Gilchrist et al., having the same assignee as the present invention and the contents of which are incorporated herein by reference. We define any of these quantities as a Gas Zone parameter (GZP). It should also be noted that the ratio $R_{ATO13}$ of the capture gamma ray counts is even more sensitive to the presence of gas and may be used in one embodiment of the invention. However, capture gamma ray counts are also sensitive to factors such as formation salinity and shale minerals and proper correction is needed for these other factors. It should be noted that during the time interval in which inelastic gamma rays are measured, there is also a contribution from capture gamma rays. Typically, both the inelastic and the capture gamma rays are measured over the same energy band of approximately 0.1MeV to 8 MeV. In one embodiment of the invention, improved counts of inelastic gamma rays are obtained by correcting for the contribution from the capture gamma rays. A method of making this correction is disclosed, for example, in US5374823 to Odom. Other methods would be known to those skilled in the art.

A table look-up is performed **155** for bounds on the GZP. The table is generated using a Monte Carlo simulation. It should be noted that the term "table look-up" as used herein is intended to include equations derived from Monte Carlo simulation relating the various factors considered in the simulation. The Monte Carlo simulation may include such factors as the formation mineralogy and effective porosity, the known tool response characteristics, the formation fluid density, the borehole fluid density, the borehole diameter and the casing diameter. In one embodiment of the invention, four broad minerals are considered: sandstones, shales, limestone and dolomite. In the invention, the gas pressure is taken as a known quantity and the table look-up is for a fixed gas pressure. The gas pressure may be determined using flow tests. The density of the formation fluid may be determined using devices such as that disclosed in US5473939 to Michaels et al., having the same assignee as the present invention and the contents of which are incorporated herein by reference. Density measurements may also be made at the surface. The borehole fluid properties may be measured at the surface and appropriate temperature and pressure corrections applied for downhole conditions.

Based on the table look-up, a value is generated for 0% gas saturation and 100% gas saturation. These are the bounds (referred to as the envelope) for the GZP. Values for the bounds and the GZP are stored for display **161** and the next depth is processed **163**. This process continues until all the depths have been processed. It should be noted that curves may also be generated for additional values of $S_g$. The relationship between GZP and $S_g$ at constant gas pressure is not linear, so that for quantitative analysis, nonlinear or linear interpolation or extrapolation may be done.

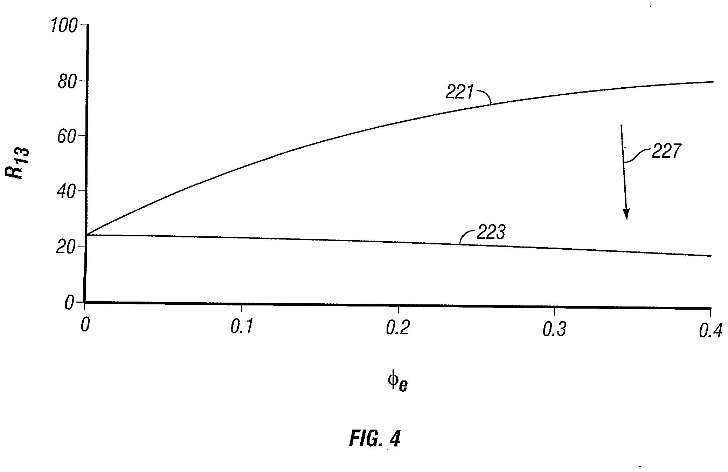

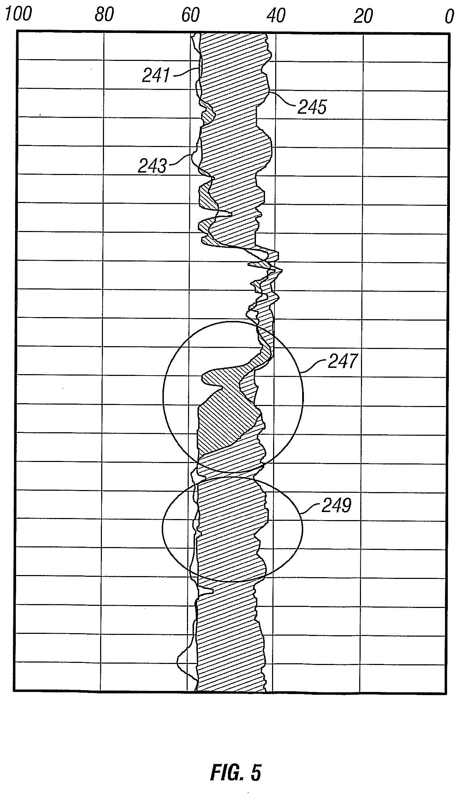

**Fig. 4** illustrates the qualitative foundation for the gas envelope. The abscissa represents the effective porosity of a gas sand within the reservoir while the ordinate is the GZP. The curve 221 is the GZP for $S_g = 0$ while the curve **223** is the GZP for $S_g = 1$ for a given gas density (which corresponds to a fixed gas pressure). As the gas sweep of the reservoir progresses, the gas saturation progressively increases, denoted by the arrow 227, and can be readily seen in a display such as that in **Fig. 5** during the course of EOR operations.

**Fig. 5** shows an exemplary display generated by the present invention. The data are from a well in a limestone reservoir that is part of an enhanced oil recovery program The curve **241** corresponds to the "wet" side, i.e., 0% gas saturation. The curve **245** corresponds to 100% gas saturation and represents the "gas" side. The curve **243** is the measured value of the GZP. It can be seen that in the zone identified as **247,** the curve **243** departs from the wet side curve **241:** this is an indication of the presence of gas, the degree of separation being indicative of the gas saturation. It should be noted that the relationship is not necessarily linear, so that linear or nonlinear interpolation or extrapolation may be used to quantify the gas saturation. In the zone identified as **249,** the curve **243** basically overlies the wet curve **241** and is an indication of a wet zone with an absence of gas.

While the example given above is for an EOR operation, similar results may be obtained in gas wells: the separation of the GZP from the "wet" value may be used for identifying gas sands within the reservoir. Subsequent development of the reservoir would then be based on perforating the casing at the identified gas intervals and producing the gas.

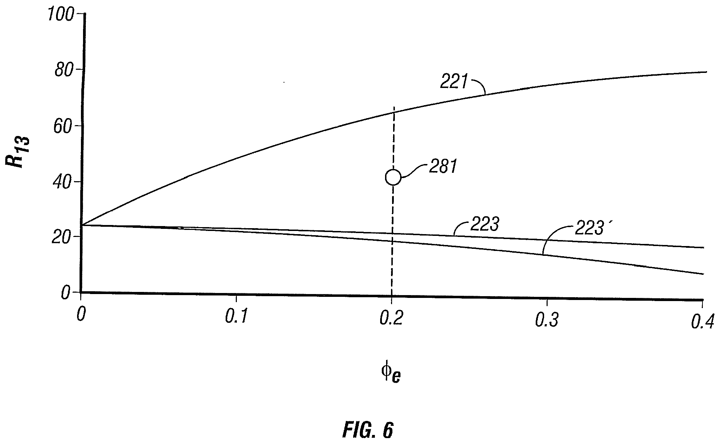

In an example not forming part of the presently claimed invention, the gas pressure may be determined. The basis for this is illustrated in **Fig. 6.** This is similar in appearance to **Fig. 4.** Here, the curve **223** represents the GZP as a function of effective porosity and may correspond to the initial gas pressure of a gas reservoir. As production continues, and assuming that there is no influx of water in the reservoir (constant $S_g$), the gas pressure drops, the gas density decreases and the GZP decreases. This results in the curve **223'** where the GZP is lower than in **223.** This means that at a fixed gas saturation, a lower gas pressure results in a bigger envelope. Note that the wet limit **221** for the envelope is independent of the gas pressure. As with the effect of $S_g$ on GZP, the effect of $P_g$ on GZP may also be nonlinear. More than two curves may be generated and linear or nonlinear interpolation or extrapolation may be used for quantitative estimation of gas pressure.

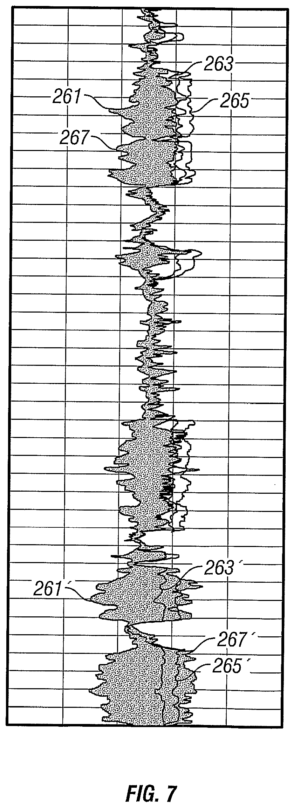

An example from a natural gas reservoir is shown in **Fig. 7.** Near the top of the section, the curve **261** is the wet bound, the curve **263** is the curve at the initial gas pressure for $S_g$ = 1. The curve **265** is the $S_g$ = 1 curve for a depleted reservoir gas pressure that corresponds to a pressure at which the reservoir would be abandoned. The actual measurements **267** lie close to the curve **263,** indicating that at least in the top of the section, the reservoir has not been pressure depleted.

The same is not true towards the bottom of the section. The curve **261'** is the wet bound, the curve **263'** is the curve at the initial reservoir gas pressure for $S_g$ = 1. The curve **265'** is the $S_g$ = 1 curve for a depleted reservoir gas pressure. The actual measurements **267'** lie close to the curve **265',** indicating that the deeper gas reservoirs have been pressure depleted and the gas pressure reduced. This has an important bearing on the reservoir development.

The present invention recognizes the fact that the assumptions of constant gas pressure or the assumption of constant gas saturation may not be satisfied. Accordingly, in one embodiment of the invention, the Carbon/Oxygen (C/O) ratio is also determined. . As would be known to those versed in the art, the inelastic gamma rays scattered at an energy of about 4.4MeV are primarily due to carbon nuclei in the formation. The inelastic gamma rays scattered at an energy of about 6.13MeV are indicative of oxygen nuclei in the formation. The C/O ratio is an independent measurement that is affected by both the gas saturation and the gas pressure.

In order to see how this may be used, we first examine **Fig. 6** in more detail and draw some inferences from it. We note that a point such as **281** in **Fig. 6** (which has a given value of GZP and effective porosity) can be the result of different combinations of gas pressure and gas saturation, or, equivalently, gas density and gas saturation. Using a plurality of values of $\rho_g$ , this relation may be qualitatively represented by the curve **283.**

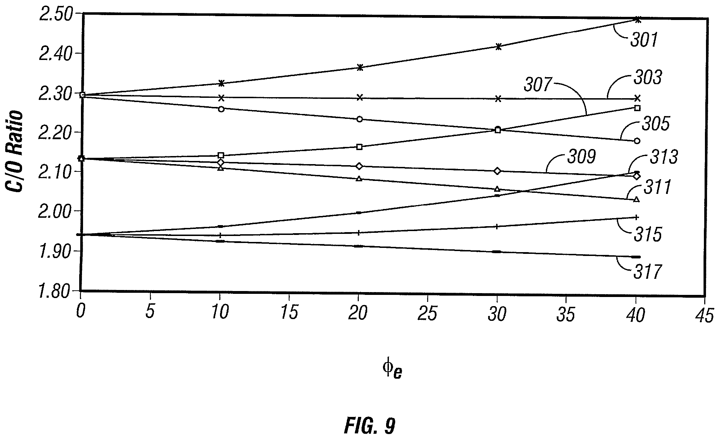

We next see what information about gas saturation may be obtained from the C/O ratio. The C/O ratio for a given borehole diameter and casing diameter depends upon effective porosity, the fluid in the rock and the fluid in the borehole. An example is given in **Fig. 9.** The abscissa is the effective porosity and the ordinate is the C/O ratio. The curves **301, 303** and **305** for an oil saturated rock, a gas saturated rock and a water saturated rock, all for a borehole full of oil. The curves **307, 309, 311** are corresponding curves for a borehole full of gas, while the curves **313, 315, 317** are for a water filled borehole. The curves in **Fig. 9** are for the LS detector in a borehole of diameter 8.5 inches (21.59cm) and a casing diameter of 5 inches (12.7cm). Similar curves exist for the SS detector.

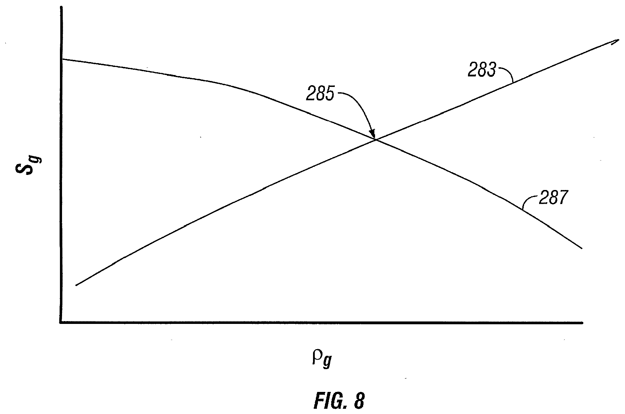

Again, for a given effective porosity, a measured value of the C/O ratio can be obtained from various combinations of $S_g$ and $\rho_g$ for a plurality of values of the effective porosity. This is represented in **Fig. 8** by the curve **287.** The intersection of curves **287** and **283** at the point **285** gives the unique solution for $S_g$ and $\rho_g$ corresponding to the observed values of the GZP and the C/O ratio. The gas pressure is then determinable from the gas density and the equation of state of the gas. The simplest known example of an equation of state is the one relating the pressure $P$, the volume $V$, and the absolute temperature $T$ of one mole of a perfect gas; that is, $PV = RT,$ in which $R$ is the universal gas constant. Dense real gases have more complicated equations of state but these are determinable for natural gas.

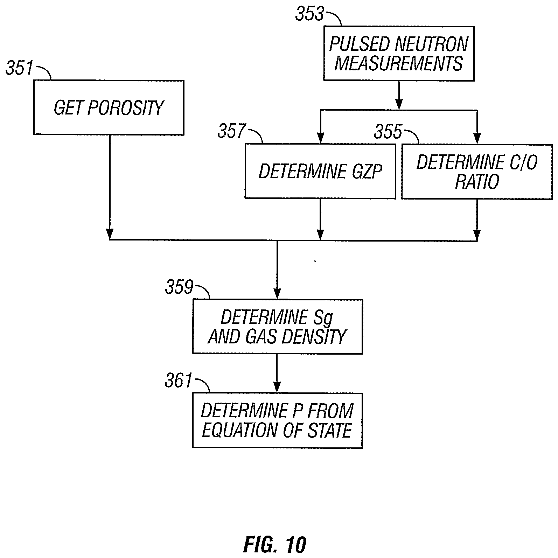

.**This** embodiment of the invention is illustrated by the flow chart of **Fig. 10.** Pulsed neutron measurements are made **353** at a particular depth. The GZP and the C/O ratio are determined **355, 357** from the pulsed neutron measurements. From known values of effective porosity **351,** the $S_g$ and $\rho_g$ are determined **359** as discussed above. Using the equation of state, the gas pressure may be determined **361.** This is repeated for additional depths. As noted above, the GZP determination is lithology specific and may further consider the effects of casing. In view of the differences in the C/O ratio estimated by the SS and the XLS detector, either one or a weighted combination of the estimates may be used.

The methods described above are quantitative methods for determination of gas saturation and gas pressure. This is in contrast to prior art methods based on density determination that are effective in qualitatively identifying the presence of gas but have little value in quantitative analysis.

The neutron source and the gamma ray detectors may be conveyed into the cased borehole on a wireline. Alternatively, the conveyance may be done using a slickline. For a slickline conveyed embodiment, the data are stored on a suitable memory device and may be processed upon recovery of the memory device at the surface or a remote location.

The processing of the measurements made in wireline applications may be done by the surface processor **33,** by a downhole processor, or at a remote location. The data acquisition may be controlled at least in part by the downhole electronics. Implicit in the control and processing of the data is the use of a computer program on a suitable machine readable medium that enables the processors to perform the control and processing. The machine readable medium may include ROMs, EPROMs, EEPROMs, Flash Memories and Optical disks. The term processor is intended to include devices such as a field programmable gate array (FPGA).

While the foregoing disclosure is directed to the specific embodiments of the invention, various modifications will be apparent to those skilled in the art. It is intended that all such variations within the scope of the appended claims be embraced by the foregoing disclosure.

**Claims**

1. A method of evaluating an earth formation having a gas therein, the method comprising:

    (a) irradiating the earth formation with a source (18) of neutrons in a borehole (10) in the earth formation; and
    (b) measuring radiation from the earth formation resulting from interaction of the neutrons with formation nuclei at at least two detectors (105, 106);
    (c) determining from the measurements a value of a gas zone parameter (GZP) indicative of a gas saturation $S_g$ at at least one depth in the borehole (10), wherein the GZP is a ratio of a radiation measurement from one of the at least two detectors (105, 106) to a radiation measurement from another of the at least two detectors (105, 106);

    the method **characterized by**:

    (d) establishing, using a look-up table, boundary values of the GZP at a fixed gas pressure, the boundary values comprising gas saturation values of 0% and 100%, the look-up tables generated by using a Monte Carlo simulation; and
    (e) estimating from the determined value of the GZP and the at least two established values of GZP a value of $S_g$.

2. The method of claim 1 wherein the borehole (10) comprises a cased borehole.

3. The method of claim 1 wherein the source (18) of neutrons further comprises a pulsed neutron source.

4. The method of claim 1 wherein the measured radiation comprises gamma rays resulting from inelastic scattering (120).

5. The method of claim 1 wherein establishing the values of the GZP further comprises using at least one of (i) a formation mineralogy, (ii) a formation porosity, (iii) a tool response characteristic, (iv) a formation fluid density, (v) borehole fluid density, (vi) a borehole diameter, (vii) a casing diameter, (viii) a gas density, and (ix) an equation of state.

6. The method of claim 1 wherein the at least one depth further comprises a plurality of depths, the method further comprising displaying, at each of the plurality of depths, the determined value of the GZP and the established values of the GZP for the at least two different values of $S_g$.

7. The method of claim 1 wherein the measured radiation comprises gamma rays.

8. The method of claim 1 wherein the at least two different values comprises at least three different values.

9. The method of claim 1 wherein estimating the value of $S_g$ further comprises using at least one of (i) a linear interpolation, (ii) a nonlinear interpolation, (iii) a linear extrapolation, and (iv) a nonlinear extrapolation.

10. An apparatus for evaluating an earth formation having a gas therein, the apparatus comprising:

**(a)** a source (18) of neutrons configured to be conveyed in a borehole (10) in the earth formation and to irradiate the earth formation;
**(b)** at least two detectors (105, 106) configured to produce signals indicative of results of interaction of the neutrons with nuclei in the earth formation; and
**(c)** a processor (34) configured to:

(A) determine from the signals a value of a gas zone parameter (GZP) indicative of a fluid saturation $S_g$ at at least one depth in the borehole (10), the GZP being a ratio of a radiation measurement from one of the at least two detectors (105, 106) to a radiation measurement from another of the at least two detectors (105, 106),

the apparatus **characterized in that** the processor is further configured to:

(B) establish, using a look-up table, boundary values of the GZP at a fixed gas pressure, the boundary values comprising gas saturation values of 0% and 100%, the look-up tables generated by using a Monte Carlo simulation; and
(C) estimate from the determined value of the GZP and the at least two established values of GZP a value of $S_g$.

11. The apparatus of claim 10 wherein the borehole (10) comprises a cased borehole.

12. The apparatus of claim 10 wherein the source (18) of neutrons further comprises a pulsed neutron source.

13. The apparatus of claim 10 wherein the interaction comprises an inelastic scattering (120).

14. The apparatus of claim 10 wherein the processor (34) is further configured to establish the values of the GZP using at least one of (i) a formation mineralogy, (ii) a formation porosity, (iii) a tool response characteristic, (iv) a formation fluid density, (v) a borehole fluid density, (vi) a borehole diameter, (vii) a casing diameter, (viii) a gas density, and (ix) an equation of state.

15. The apparatus of claim 10 wherein the at least one depth further comprises a plurality of depths, and wherein the processor (34) is further configured to display, at each of the plurality of depths, the determined value of the GZP and the established values of the GZP for the at least two different values of $S_g$.

16. The apparatus of claim 10 further comprising a conveyance device configured to convey the source of radiation into the borehole, the conveyance device selected from the group consisting of (i) a wireline, and (ii) a slickline.

17. The apparatus of claim 10 wherein the at least two detectors (105, 106) are configured to be responsive to gamma radiation.

18. A machine readable medium for use with an apparatus according to claim 10 for evaluating an earth formation having a gas therein, the machine readable medium comprising instructions which, when executed by a processor (34), cause the processor (34) to:

(c) determine from the signals produced by the at least two detectors of the apparatus of claim 10, a value of a fluid zone parameter (GZP) indicative of a fluid saturation $S_g$ at at least one depth in the borehole, wherein the GZP is a ratio of a radiation measurement from one of the at least two detectors (105, 106) to a radiation measurement from another of the at least two detectors (105, 106), of the apparatus of claim 10,
(d) establish, using a look-up table, boundary values of the GZP at a fixed gas pressure, the boundary values comprising gas saturation values of 0% and 100%, the look-up tables generated by using a Monte Carlo simulation; and
(e) estimate from the determined value of the GZP and the at least two established values of GZP a value of $S_g$.

19. The medium of claim 18 further comprising at least one of: (i) a ROM, (ii) an EPROM, (iii) an EEPROM, (iv) a Flash Memory, and (v) an optical disk.

**Patentansprüche**

1. Verfahren zum Bewerten einer Erdformation, die darin ein Gas aufweist, wobei das Verfahren umfasst:

   (a) Bestrahlen der Erdformation mit einer Quelle (18) von Neutronen in einem Bohrloch (10) in der Erdformation; und
   (b) Messen von Strahlung aus der Erdformation, die sich aus Wechselwirkung der Neutronen mit Formationskernen bei mindestens zwei Detektoren (105, 106) ergibt;
   (c) Bestimmen eines Werts eines Gaszonenparameters (GZP) aus den Messungen, der eine Gassättigung $S_g$ an mindestens einer Tiefe in dem Bohrloch (10) anzeigt, wobei der GZP ein Verhältnis einer Strahlungsmessung von einem der mindestens zwei Detektoren (105, 106) zu einer Strahlungsmessung von einem anderen der mindestens zwei Detektoren (105, 106) ist;

   wobei das Verfahren **gekennzeichnet ist durch:**

   (d) Ermitteln, unter Verwendung einer Nachschlagetabelle, von Grenzwerten des GZP bei einem festen Gasdruck, wobei die Grenzwerte Gassättigungswerte von 0 % und 100 % umfassen, wobei die Nachschlagetabellen unter Verwendung einer Monte-Carlo-Simulation erzeugt werden; und
   (e) Schätzen aus dem bestimmten GZP-Wert und den mindestens zwei ermittelten GZP-Werten eines Wertes $S_g$.

2. Verfahren nach Anspruch 1, wobei das Bohrloch (10) ein verkleidetes Bohrloch umfasst.

3. Verfahren nach Anspruch 1, wobei die Quelle (18) von Neutronen ferner eine gepulste Neutronenquelle ist.

4. Verfahren nach Anspruch 1, wobei die gemessene Strahlung Gammastrahlen umfasst, die aus einer unelastischen Streuung (120) resultieren.

5. Verfahren nach Anspruch 1, wobei das Ermitteln der Werte des GZP ferner das Verwenden von mindestens einem von (i) einer Gesteinsformation, (ii) einer Formationsporosität, (iii) einer Werkzeugreaktionseigenschaft, (iv) einer Formationsfluiddichte, (v) einer Bohrlochfluiddichte, (vi) eines Bohrlochdurchmessers, (vii) eines Verkleidungsdurchmessers (viii), einer Gasdichte und (ix) einer Zustandsgleichung umfasst.

6. Verfahren nach Anspruch 1, wobei die mindestens eine Tiefe ferner eine Vielzahl von Tiefen umfasst, wobei das Verfahren ferner das Anzeigen, an jeder der Vielzahl von Tiefen, des bestimmten Werts des GZP und der ermittelten Werte des GZP für die mindestens zwei unterschiedlichen Werte von $S_g$ umfasst.

7. Verfahren nach Anspruch 1, wobei die gemessene Strahlung Gammastrahlen umfasst.

8. Verfahren nach Anspruch 1, wobei die mindestens zwei unterschiedlichen Werte mindestens drei unterschiedliche Werte umfassen.

9. Verfahren nach Anspruch 1, wobei das Schätzen des Werts von $S_g$ ferner das Verwenden mindestens eines von (i) einer linearen Interpolation, (ii) einer nichtlinearen Interpolation, (iii) einer linearen Extrapolation und (iv) einer nichtlinearen Extrapolation umfasst.

10. Vorrichtung zum Bewerten einer Erdformation, die darin ein Gas aufweist, wobei die Vorrichtung umfasst:

    (a) eine Quelle (18) von Neutronen, die konfiguriert ist, um in einem Bohrloch (10) in der Erdformation gefördert zu werden und die Erdformation zu bestrahlen;
    (b) mindestens zwei Detektoren (105,106), die konfiguriert sind, um Signale zu erzeugen, die Ergebnisse der Wechselwirkung der Neutronen mit Kernen in der Erdformation anzeigen; und
    (c) einen Prozessor (34), der konfiguriert ist zum:

    (A) Bestimmen eines Werts eines Gaszonenparameters (GZP) aus den Signalen, der eine Fluidsättigung $S_g$ an mindestens einer Tiefe in dem Bohrloch (10) anzeigt, wobei der GZP ein Verhältnis einer Strahlungsmessung von einem der mindestens zwei Detektoren (105, 106) zu einer Strahlungsmessung von einem anderen der mindestens zwei Detektoren (105, 106) ist,

**dadurch gekennzeichnet, dass** die Vorrichtung ferner konfiguriert ist zum:

(B) Ermitteln, unter Verwendung einer Nachschlagetabelle, von Grenzwerten des GZP bei einem festen Gasdruck, wobei die Grenzwerte Gassättigungswerte von 0 % und 100 % umfassen, wobei die Nachschlagetabellen unter Verwendung einer Monte-Carlo-Simulation erzeugt werden; und
(C) Schätzen aus dem bestimmten GZP-Wert und der mindestens zwei ermittelten GZP-Werte eines Wertes von $S_g$.

**11.** Vorrichtung nach Anspruch 10, wobei das Bohrloch (10) ein verkleidetes Bohrloch umfasst.

**12.** Vorrichtung nach Anspruch 10, wobei die Quelle (18) von Neutronen eine gepulste Neutronenquelle ist.

**13.** Vorrichtung nach Anspruch 10, wobei die Wechselwirkung eine unelastische Streuung (120) umfasst.

**14.** Vorrichtung nach Anspruch 10, wobei der Prozessor (34) ferner konfiguriert ist, um die GZP-Werte unter Verwendung mindestens eines von (i) einer Gesteinsformation, (ii) einer Formationsporosität, (iii) einer Werkzeugreaktionseigenschaft, (iv) einer Formationsfluiddichte, (v) einer Bohrlochfluiddichte, (vi) eines Bohrlochdurchmessers, (vii) eines Verkleidungsdurchmessers, (viii) einer Gasdichte und (ix) einer Zustandsgleichung zu ermitteln.

**15.** Vorrichtung nach Anspruch 10, wobei die mindestens eine Tiefe ferner eine Vielzahl von Tiefen umfasst, und wobei der Prozessor (34) ferner konfiguriert ist, um an jeder der Vielzahl von Tiefen den bestimmten GZP-Wert und die ermittelten GZP-Werte für die mindestens zwei unterschiedlichen Werte von $S_g$ anzuzeigen.

**16.** Vorrichtung nach Anspruch 10, ferner umfassend eine Fördervorrichtung, die konfiguriert ist, um die Strahlungsquelle in ein Bohrloch zu fördern, wobei die Fördervorrichtung ausgewählt ist aus der Gruppe bestehend aus (i) einer Drahtleitung und (ii) einer Slickline.

**17.** Vorrichtung nach Anspruch 10, wobei die mindestens zwei Detektoren (105, 106) konfiguriert sind, um auf Gammastrahlung zu reagieren.

**18.** Maschinenlesbares Medium zur Verwendung mit einer Vorrichtung nach Anspruch 10 zum Bewerten einer Erdformation mit einem darin enthaltenen Gas, wobei das maschinenlesbare Medium Anweisungen umfasst, die, wenn sie von einem Prozessor (34) ausgeführt werden, den Prozessor (34) veranlassen zum:

(c) Bestimmen, aus den Signalen, die von den mindestens zwei Detektoren der Vorrichtung nach Anspruch 10 erzeugt werden, eines Werts eines Fluidzonenparameters (GZP), der eine Fluidsättigung $S_g$ an mindestens einer Tiefe in dem Bohrloch anzeigt, wobei der GZP ein Verhältnis einer Strahlungsmessung von einem der mindestens zwei Detektoren (105, 106) zu einer Strahlungsmessung von einem anderen der mindestens zwei Detektoren (105, 106) der Vorrichtung nach Anspruch 10 ist,
(d) Ermitteln, unter Verwendung einer Nachschlagetabelle, von Grenzwerten des GZP bei einem festen Gasdruck, wobei die Grenzwerte Gassättigungswerte von 0 % und 100 % umfassen, wobei die Nachschlagetabellen unter Verwendung einer Monte-Carlo-Simulation erzeugt werden; und
(e) Schätzen aus dem bestimmten GZP-Wert und den mindestens zwei ermittelten GZP-Werten eines Wertes von $S_g$.

**19.** Mittel nach Anspruch 18, ferner umfassend mindestens eines von: (i) einem ROM, (ii) einem EPROM, (iii) einem EEPROM, (iv) einem Flash-Speicher und (v) einer optischen Platte.

**Revendications**

**1.** Procédé d'évaluation d'une formation terrestre ayant un gaz à l'intérieur de celle-ci, le procédé comprenant :

(a) l'irradiation de la formation terrestre avec une source (18) de neutrons dans un trou de forage (10) dans la formation terrestre ; et
(b) la mesure du rayonnement de la formation terrestre résultant de l'interaction des neutrons avec des noyaux de formation au niveau d'au moins deux détecteurs (105, 106) ;
(c) la détermination à partir des mesures d'une valeur d'un paramètre de zone de gaz (GZP) indiquant une saturation de gaz $S_g$ au niveau d'au moins une profondeur dans le trou de forage (10), dans lequel le GZP est un rapport d'une mesure de rayonnement de l'un des au moins deux détecteurs (105, 106) à une mesure de rayonnement d'un autre des au moins deux détecteurs (105, 106) ;

le procédé étant **caractérisé par** :

(d) l'établissement, à l'aide d'une table de consultation, de valeurs limites du GZP à une pression de gaz fixe, les valeurs limites comprenant des valeurs de saturation de gaz de 0 % et 100 %, les tables de consultation étant générées à l'aide d'une simulation de Monte Carlo ; et

(e) l'estimation à partir de la valeur déterminée du GZP et des au moins deux valeurs établies de GZP d'une valeur de $S_g$.

2. Procédé selon la revendication 1 dans lequel le trou de forage (10) comprend un trou de forage tubé.

3. Procédé selon la revendication 1 dans lequel la source (18) de neutrons comprend en outre une source de neutrons pulsés.

4. Procédé selon la revendication 1 dans lequel le rayonnement mesuré comprend des rayons gamma résultant de la diffusion inélastique (120).

5. Procédé selon la revendication 1 dans lequel l'établissement des valeurs du GZP comprend en outre l'utilisation d'au moins l'un (i) d'une minéralogie de formation, (ii) d'une porosité de formation, (iii) d'une caractéristique de réponse d'outil, (iv) d'une densité de fluide de formation, (v) d'une densité de fluide de trou de forage, (vi) d'un diamètre de trou de forage, (vii) d'un diamètre de tubage, (viii) d'une densité de gaz et (ix) d'une équation d'état.

6. Procédé selon la revendication 1 dans lequel l'au moins une profondeur comprend en outre une pluralité de profondeurs, le procédé comprenant en outre l'affichage, à chacune de la pluralité de profondeurs, de la valeur déterminée du GZP et des valeurs établies du GZP pour les au moins deux valeurs différentes de $S_g$.

7. Procédé selon la revendication 1 dans lequel le rayonnement mesuré comprend des rayons gamma.

8. Procédé selon la revendication 1 dans lequel les au moins deux valeurs différentes comprennent au moins trois valeurs différentes.

9. Procédé selon la revendication 1 dans lequel l'estimation de la valeur de $S_g$ comprend en outre l'utilisation d'au moins l'une (i) d'une interpolation linéaire, (ii) d'une interpolation non linéaire, (iii) d'une extrapolation linéaire, et (iv) d'une extrapolation non linéaire.

10. Appareil d'évaluation d'une formation terrestre ayant un gaz à l'intérieur de celle-ci, l'appareil comprenant :

(a) une source (18) de neutrons configurée pour être transportée dans un trou de forage (10) dans la formation terrestre et pour irradier la formation terrestre ;

(b) au moins deux détecteurs (105, 106) configurés pour produire des signaux indiquant des résultats d'interaction des neutrons avec des noyaux dans la formation terrestre ; et

(c) un processeur (34) configuré pour :

(A) la détermination à partir des signaux d'une valeur d'un paramètre de zone de gaz (GZP) indiquant une saturation de fluide $S_g$ au niveau d'au moins une profondeur dans le trou de forage (10), le GZP étant un rapport d'une mesure de rayonnement de l'un des au moins deux détecteurs (105, 106) à une mesure de rayonnement d'un autre des au moins deux détecteurs (105, 106),

l'appareil étant **caractérisé en ce que** le processeur est en outre configuré pour :

(B) établir, à l'aide d'une table de consultation, des valeurs limites du GZP à une pression de gaz fixe, les valeurs limites comprenant des valeurs de saturation de gaz de 0 % et 100 %, les tables de consultation étant générées à l'aide d'une simulation de Monte Carlo ; et

(C) estimer à partir de la valeur déterminée du GZP et des au moins deux valeurs établies de GZP une valeur de $S_g$.

**11.** Appareil selon la revendication 10 dans lequel le trou de forage (10) comprend un trou de forage tubé.

**12.** Appareil selon la revendication 10 dans lequel la source (18) de neutrons comprend en outre une source de neutrons pulsés.

**13.** Appareil selon la revendication 10 dans lequel l'interaction comprend une diffusion inélastique (120).

**14.** Appareil selon la revendication 10 dans lequel le processeur (34) est en outre configuré pour établir les valeurs du GZP à l'aide d'au moins l'un parmi (i) une minéralogie de formation, (ii) une porosité de formation, (iii) une caractéristique de réponse d'outil, (iv) une densité de fluide de formation, (v) une densité de fluide de trou de forage, (vi) un diamètre de trou de forage, (vii) un diamètre de tubage, (viii) une densité de gaz et (ix) une équation d'état.

**15.** Appareil selon la revendication 10 dans lequel l'au moins une profondeur comprend en outre une pluralité de profondeurs, et dans lequel le processeur (34) est en outre configuré pour afficher, à chacune de la pluralité de profondeurs, la valeur déterminée du GZP et les valeurs établies du GZP pour les au moins deux valeurs différentes de $S_g$.

**16.** Appareil selon la revendication 10 comprenant en outre un dispositif de transport configuré pour transporter la source de rayonnement dans le trou de forage, le dispositif de transport choisi parmi le groupe constitué par (i) un câble métallique et (ii) un câble lisse.

**17.** Appareil selon la revendication 10 dans lequel les au moins deux détecteurs (105, 106) sont configurés pour répondre à un rayonnement gamma.

**18.** Support lisible par machine destiné à être utilisé avec un appareil selon la revendication 10 pour l'évaluation d'une formation terrestre ayant un gaz à l'intérieur de celle-ci, le support lisible par machine comprenant des instructions qui, lorsqu'elles sont exécutées par un processeur (34), amènent le processeur (34) à :

> **(c)** déterminer à partir des signaux produits par les au moins deux détecteurs de l'appareil selon la revendication 10, une valeur d'un paramètre de zone de fluide (GZP) indiquant une saturation de fluide $S_g$ au niveau de l'au moins une profondeur dans le trou de forage, dans lequel le GZP est un rapport d'une mesure de rayonnement de l'un des au moins deux détecteurs (105, 106) à une mesure de rayonnement d'un autre des au moins deux détecteurs (105, 106), de l'appareil selon la revendication 10,
> **(d)** établir, à l'aide d'une table de consultation, de valeurs limites du GZP à une pression de gaz fixe, les valeurs limites comprenant des valeurs de saturation de gaz de 0 % et 100 %, les tables de consultation étant générées à l'aide d'une simulation de Monte Carlo ; et
> **(e)** estimer à partir de la valeur déterminée du GZP et des au moins deux valeurs établies de GZP d'une valeur de $S_g$.

**19.** Support selon la revendication 18 comprenant en outre au moins l'un parmi : (i) une ROM, (ii) une EPROM, (iii) une EEPROM, (iv) une mémoire flash et (v) un disque optique.

**FIG. 1**

100

107 — DETECTOR 3

106 — DETECTOR 2

105 — DETECTOR 1

101 —

130

CAPTURE γ-RAY

T=100'S μS
110

110

INELASTIC
γ-RAY

T=μS
120

NEUTRON

T=0

**FIG. 2**

FIG. 3

**FIG. 4**

EP 1 917 545 B1

FIG. 5

18

FIG. 6

**FIG. 7**

20

FIG. 8

**FIG. 9**

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3780301 A, Smith Jr.
- US 5525797 A, Moake
- US 5825024 A, Badruzzaman
- US 5105080 A
- US 20030178560 A
- US 2833914 A
- US 4524274 A
- US 20050067563 A
- US 955867, Gilchrist
- US 5374823 A, Odom
- US 5473939 A, Michaels

**Non-patent literature cited in the description**

- **MEDHAT MICKAEL.** *Dynamic Multi-parameter Interpretation of Dual-Detector Carbon/Oxygen Measurements*